# EUROPEAN PATENT APPLICATION

(11) **EP 4 340 073 A1**
(43) Date of publication of application: **20.03.2024**
(21) Application number: 22815188.2
(22) Date of filing: 27.05.2022
(51) Int. Cl.: H01M 4/62, H01M 4/134

(54) **COMPOSITE BINDER, NEGATIVE ELECTRODE SLURRY, SILICON NEGATIVE ELECTRODE PLATE, AND LITHIUM-ION BATTERY**

(30) Priority: 31.05.2021 CN 202110605545
(71) Applicant: SVOLT ENERGY TECHNOLOGY CO., LTD, Changzhou, Jiangsu 213200 (CN)
(72) Inventor: CHANG, Xingqi, hangzhou, Jiangsu 213200 (CN); LI, Shuren, hangzhou, Jiangsu 213200 (CN)
(74) Representative: Groth & Co. KB
(86) International application number: PCT/CN2022/095733
(87) International publication number: WO 2022/253142

(57) **Abstract**

A composite binder, a negative electrode slurry, a silicon negative electrode plate, and a lithium-ion battery. The composite binder comprises a perfluorosulfonic acid, polyvinylidene fluoride (PVDF), and a solvent. The perfluorosulfonic acid, as a flexible binder, can effectively enhance the toughness of an electrode plate and reduce the phenomenon of electrode cracks, thereby maintaining the integrity of a silicon negative electrode plate structure, reducing the loss of active substances, and improving the cycle performance of a battery. Moreover, since the perfluorosulfonic acid itself can form a strong hydrogen bond with a surface of a silicon negative electrode material, the perfluorosulfonic acid has an excellent binding effect on a Si material; in addition, the perfluorosulfonic acid can effectively mitigate swelling effects of PVDF in an electrolyte and ensure a 3D binding network structure of an electrode plate, so that a lithium-ion battery has a high capacity retention rate. Therefore, the combination of a perfluorosulfonic acid and PVDF as a composite binder can implement a fuller synergistic effect between the perfluorosulfonic acid and the PVDF, thereby not only improving the binding strength of a binder to a silicon material, but also improving the overall electrical performance of a lithium battery.

## Description

The present application is based on and claims priority of the Chinese Patent Application No. 202110605545.5, filed on May 31, 2021, the disclosure of which is hereby incorporated by reference in its entirety.

### FIELD OF THE INVENTION

The present application relates to the technical field of lithium-ion batteries, and specifically to a composite binder, a negative electrode slurry, a silicon negative electrode plate, and a lithium-ion battery.

### BACKGROUND OF THE INVENTION

Lithium-ion batteries are widely used in high energy density battery products because they have advantages such as high energy density, no memory effect, wide operating temperature, and high voltage window, etc. With the growing demand for battery energy density, lithium-ion batteries using the stacking process have emerged as a new generation of batteries with higher energy density and better cycling performance. With the intelligent development of the electrical industry and the popularity of electric vehicles, the demand for lithium-ion batteries has exploded, but the safety of the battery has become increasingly prominent, and the production cost of the battery is also rising rapidly.

Among them, with the development of electric vehicles, the demand for electric vehicle mileage continues to rise, and car companies have launched high-mileage electric vehicles, electric vehicles ranging from 500 kilometres all the way to 1,000 kilometres are constantly emerging on the market. Various battery companies have also introduced cell batteries with an energy density of up to 300Wh/kg in the hope that the mileage of electric vehicles can exceed 1,000 kilometres. From the perspective of cost, if the mileage of batteries exceeds 1,000 kilometres, the use cost of electric vehicles charging and discharging 1,500 times is much lower than that of fuel vehicles, and there is a better sense of user experience. The overall energy density of the battery can be improved by matching silicon carbon negative electrode material and high nickel positive electrode material, thus the battery with the energy density of more than 300Wh/kg can be obtained. The problem is that although the theoretical specific capacity of silicon can reach 4,200 mAh/g, the volume expansion in the process of lithium intercalation is as high as 300%, which will not only cause the pulverization and crushing of the Si material itself, but also cause the electrode plate to fall off and cracks to be produced, thereby leading to the poor electrical performance of lithium batteries.

As a standard binder for lithium batteries, PVDF (polyvinylidene fluoride) itself shows good stability on the material surface. However, on the one hand, PVDF can only rely on very weak van der Waals force on the surface of silicon material, thus its bonding to silicon material is poor. On the other hand, the strong absorption ability of PVDF to the electrolyte solution causes more solid-liquid contact film (SEI) to be formed between the binder and the silicon material in the process of expansion and contraction of the silicon material, thus further weakening the bonding strength of the binder, which further affects the electrical performance of the lithium battery. In addition, the electrode is prone to form some tiny cracks in the process of rapid drying, and these cracks are prone to cause the silicon negative electrode plate material to fall off during the battery cycling process, thus reducing the cycling performance of the battery.

### SUMMARY OF INVENTION

The main purpose of the present application is to provide a composite binder, a negative electrode slurry, a silicon negative electrode plate and a lithium-ion battery, in order to solve the problem that the lithium-ion batteries of the prior art have poor electrical performance due to the expansion of the Si material.

In order to achieve the above purpose, one aspect of the present application provides a composite binder comprising perfluorosulfonic acid, polyvinylidene fluoride, and a solvent.

Further, a mass ratio of the perfluorosulfonic acid to the polyvinylidene fluoride is (2-4):1, preferably 3:1.

Further, the perfluorosulfonic acid described above is a perfluorosulfonic acid of C₃ to C₁₀, preferably the perfluorosulfonic acid is selected from any one or more of the group consisting of perfluorobutanesulfonic acid, perfluoropentanesulfonic acid, perfluorohexanesulfonic acid, perfluoroheptanesulfonic acid, and perfluorooctanesulfonic acid.

Further, a mass concentration of the perfluorosulfonic acid in the composite binder is in a range from 0.2 wt% to 10 wt%.

Further, the solvent described above is selected from any one or more of the group consisting of N-methylpyrrolidone, acetone, tetrahydrofuran, and dimethyl sulfoxide.

Another aspect of the present application provides a negative electrode slurry, the negative electrode slurry comprises a binder liquid, a silicon material, and a conductive agent, wherein the binder liquid is the composite binder described above.

Further, a mass ratio of the silicon material described above to the conductive agent is (40-50): (20-30), and a mass ratio of the silicon material described above to the perfluorosulfonic acid in the composite binder is (2-5):100.

Further, the conductive agent described above is selected from any one or more of the group consisting of conductive carbon black, graphite, acetylene black, carbon nanotubes, and graphene, and the silicon material includes any one or more of Si, SiC, SiO₂, and SiO.

Another aspect of the present application provides a silicon negative electrode plate comprising a current collector and a negative electrode body, and the negative electrode body is prepared from the negative electrode slurry described above.

Another aspect of the present application provides a lithium-ion battery comprising a positive electrode plate, a negative electrode plate, and an electrolyte solution, and the negative electrode plate is the silicon negative electrode plate described above.

In the technical solution of the present application, perfluorosulfonic acid is used as a flexible binder, and the use of perfluorosulfonic acid can effectively enhance the toughness of the electrode plate, alleviate the expansion effect of the silicon material and thereby reduce the phenomenon of electrode cracking, and then maintain the integrity of the silicon negative electrode structure, reduce the loss of active materials, and enhance the cycling performance of the battery. In addition, perfluorosulfonic acid itself can form strong hydrogen bond with the surface of Si electrode plate material, so perfluorosulfonic acid has excellent bonding effect on Si material; at the same time, perfluorosulfonic acid has weak absorption ability to electrolyte solution, so it can effectively mitigate swelling effects of PVDF in the electrolyte solution, ensure the 3D bonding network structure of the electrode plate, and then make the lithium battery have a higher capacity retention rate. Therefore, using the combination of perfluorosulfonic acid and PVDF as the components of the composite binder can achieve synergy between the two, which not only improves the bonding strength of the binder to the silicon material, but also improves the overall electrical performance of the lithium battery.

### DETAILED DESCRIPTION OF THE INVENTION

It should be noted that the embodiments and features of the embodiments of the present application may be combined with each other without conflict. The present application will be described in detail below in conjunction with embodiments.

As analyzed in the background of the invention, there is a problem in the prior art that lithium-ion batteries have poor electrical performance due to the expansion of Si material, and in order to solve the problem, the present application provides a composite binder, a negative electrode slurry, a silicon negative electrode plate and a lithium-ion battery.

In an exemplary embodiment of the present application, a composite binder is provided, and the composite binder comprises a perfluorosulfonic acid, polyvinylidene fluoride, and a solvent.

Perfluorosulfonic acid is used as a flexible binder, and the use of perfluorosulfonic acid can effectively enhance the toughness of the electrode plate, alleviate the expansion effect of the silicon material and thereby reduce the phenomenon of electrode cracking, and then maintain the integrity of the silicon negative electrode structure, reduce the loss of active materials, and enhance the cycling performance of the battery. In addition, perfluorosulfonic acid itself can form strong hydrogen bond with the surface of Si electrode plate material, so perfluorosulfonic acid has excellent bonding effect on Si material; at the same time, perfluorosulfonic acid has weak absorption ability to electrolyte solution, so it can effectively mitigate swelling effects of PVDF in the electrolyte solution, ensure the 3D bonding network structure of the electrode plate, and then make the lithium battery have a higher capacity retention rate. Therefore, using the combination of perfluorosulfonic acid and PVDF as the components of the composite binder can achieve synergy between the two, which not only improves the bonding strength of the binder to the silicon material, but also improves the overall electrical performance of the lithium battery.

In order to further improve the synergistic effect of the perfluorosulfonic acid and the polyvinylidene fluoride, it is preferred that the mass ratio of the perfluorosulfonic acid to the polyvinylidene fluoride is (2-4):1, and it is preferred that the mass ratio of the perfluorosulfonic acid to the polyvinylidene fluoride is 3:1.

The perfluorosulfonic acid is an organic acid, and in order to ensure that the perfluorosulfonic acid and the polyvinylidene fluoride synergise more fully so as to give play to the excellent performance of the perfluorosulfonic acid, while reducing as much as possible the side effect of the acidity of the perfluorosulfonic acid on the electrolyte solution, it is preferred that the perfluorosulfonic acid described above is a perfluorosulfonic acid of C₃ to C₁₀. Further, it is preferred that the perfluorosulfonic acid is selected from any one or more of the group consisting of perfluorobutanesulfonic acid, perfluoropentanesulfonic acid, perfluorohexanesulfonic acid, perfluoroheptanesulfonic acid, and perfluorooctanesulfonic acid.

In order to ensure that the perfluorosulfonic acid and the polyvinylidene difluoride are more fully dissolved in the solvent while making the composite binder have a suitable viscosity, so that it is not difficult to coat the composite binder uniformly because the viscosity of the composite binder is too large, and it is not difficult to increase the workload of coating the binder because the viscosity of the composite binder is too small, it is preferred that the mass concentration of perfluorosulfonic acid in the composite binder is in a range from 0.2 wt% to 10 wt%.

In some embodiments, in order to increase the solubility of the perfluorosulfonic acid and the polyvinylidene difluoride in the solvent, and to make the solvent evaporate as quickly as possible after coating the composite binder, it is preferred that the solvent is selected from any one or more of the group consisting of N-methylpyrrolidone, acetone, tetrahydrofuran, and dimethyl sulfoxide.

In an another exemplary embodiment of the present application, a negative electrode slurry is provided, wherein the negative electrode slurry comprises a binder liquid, a silicon material, and a conductive agent, wherein the binder liquid is the composite binder described above.

Perfluorosulfonic acid is used as a flexible binder, and the use of perfluorosulfonic acid can effectively enhance the toughness of the electrode plate, alleviate the expansion effect of the silicon material and thereby reduce the phenomenon of electrode cracking, and then maintain the integrity of the silicon negative electrode structure, reduce the loss of active materials, and enhance the cycling performance of the battery. In addition, perfluorosulfonic acid itself can form strong hydrogen bond with the surface of Si electrode plate material, so perfluorosulfonic acid has excellent bonding effect on Si material; at the same time, perfluorosulfonic acid has weak absorption ability to electrolyte solution, so it can effectively mitigate swelling effects of PVDF in the electrolyte solution, ensure the 3D bonding network structure of the electrode plate, and then make the lithium battery have a higher capacity retention rate. Therefore, using the combination of perfluorosulfonic acid and PVDF as the components of the composite binder can achieve synergy between the two, which not only improves the bonding strength of the binder to the silicon material, but also improves the overall electrical performance of the lithium battery. Further, when the negative electrode slurry comprising the composite binder is used in the preparation of the negative electrode plate of the battery, especially when it is used in the silicon negative electrode plate, the negative electrode plate obtained has both excellent electrical performance and service life.

In the negative electrode slurry of the present application, the amount of the silicon material and the conductive agent can be referred to the prior art, and in order to improve the energy density as much as possible and to control the volume expansion of silicon, it is preferred that the mass ratio of the silicon material described above to the conductive agent is (40 - 50): (20 - 30). In addition, in order to improve the cooperating effect of the silicon material and the composite binder so as to improve as much as possible the bonding effect of the composite binder on the silicon material and the mitigating effect on the swelling effect of the silicon material, it is preferred that the mass ratio of the silicon material described above to the perfluorosulfonic acid in the composite binder is (2 - 5):100.

The conductive agent for use in the present application may be selected from the conductive agents commonly used in the present field, and in order to better cooperate with the silicon material, it is preferred that the conductive agent described above is selected from any one or more of the group consisting of conductive carbon black, graphite, acetylene black, carbon nanotubes, and graphene, which is conducive to improving the conductivity of the negative electrode plate prepared from the above negative electrode slurry. The silicon material for use in the present application may be silicon elementary substance, silicon oxide, silicon carbide, or a modified product obtained by modifying the silicon elementary substance, silicon oxide, or silicon carbide using carbon or metal coating or the like, for example, the above silicon material comprises any one or more of Si, SiC, SiO₂, and SiO.

In yet another typical embodiment of the present application, a silicon negative electrode sheet is provided, which is made by coating a negative electrode slurry onto a current collector, and the negative electrode slurry is the aforementioned negative electrode slurry.

The silicon negative electrode plate obtained from the above negative electrode slurry can effectively mitigate the swelling effect of PVDF in the electrolyte solution, ensure the 3D bonding network structure of the electrode plate, and effectively relieve the expansion effect of the silicon material, and thus enable the lithium-ion battery to have excellent electrical performance and service life when the silicon negative electrode plate is applied to the lithium-ion battery.

In yet another typical embodiment of the present application, a lithium-ion battery is provided, which comprises a positive electrode plate, a negative electrode plate, and an electrolyte solution, and the negative electrode plate is the silicon negative electrode plate described above.

The lithium-ion battery comprising the above silicon negative electrode plate has excellent electrical performance and service life.

The beneficial technical effects of the present application will be illustrated below in connection with specific examples and comparative examples.

### Example 1

PVDF (Wokai Chemical Co., Ltd.) and perfluorooctanesulfonic acid in a mass ratio of 3:1 were dissolved in N-methylpyrrolidone (NMP) to obtain a composite binder, and the mass concentration of perfluorooctanesulfonic acid in the composite binder was 5 wt%. Subsequently, nano-silicon (particle size less than 5 nm) and conductive carbon black (Duofuduo Chemical Co., Ltd.) were added into the composite binder, and the negative electrode slurry was obtained after stirring homogeneously, wherein the mass ratio of nano-silicon to conductive carbon black was 50:25, and the mass ratio of nano-silicon to perfluorooctanesulfonic acid was 3:100, and this negative electrode slurry was coated on the surface of the copper foil, and a 120 µm-thick silicon negative electrode plate was prepared after baking, and roll-pressing.

### Example 2

The difference between Example 2 and Example 1 was that:
the total mass of PVDF and perfluorooctanesulfonic acid was unchanged, and the mass ratio of PVDF to perfluorooctanesulfonic acid was 2:1, and the silicon negative electrode plate was finally obtained.

### Example 3

The difference between Example 3 and Example 1 was that:
the total mass of PVDF and perfluorooctanesulfonic acid was unchanged, and the mass ratio of PVDF to perfluorooctanesulfonic acid was 4:1, and the silicon negative electrode plate was finally obtained.

### Example 4

The difference between Example 4 and Example 1 was that:
the total mass of PVDF and perfluorooctanesulfonic acid was unchanged, and the mass ratio of PVDF to perfluorooctanesulfonic acid was 5:1, and the silicon negative electrode plate was finally obtained.

### Example 5

The difference between Example 5 and Example 1 was that:
the total mass of PVDF and perfluorooctanesulfonic acid was unchanged, and the mass ratio of PVDF to perfluorooctanesulfonic acid was 1:1, and the silicon negative electrode plate was finally obtained.

### Example 6

The difference between Example 6 and Example 1 was that:
perfluorobutanesulfonic acid was used instead of perfluorooctanesulfonic acid, and the silicon negative electrode plate was finally obtained.

### Example 7

The difference between Example 7 and Example 1 was that:
perfluoroheptanesulfonic acid was used instead of perfluorooctanesulfonic acid, and the silicon negative electrode plate was finally obtained.

### Example 8

The difference between Example 8 and Example 1 was that:
the mass concentration of perfluorosulfonic acid in the composite binder was 0.2 wt%, and the silicon negative electrode plate was finally obtained.

### Example 9

The difference between Example 9 and Example 1 was that:
the mass concentration of perfluorosulfonic acid in the composite binder was 10 wt%, and the silicon negative electrode plate was finally obtained.

### Example 10

The difference between Example 10 and Example 1 was that:
the mass concentration of perfluorosulfonic acid in the composite binder was 15 wt%, and the silicon negative electrode plate was finally obtained.

### Example 11

The difference between Example 11 and Example 1 was that:
tetrahydrofuran was used instead of NMP, and the silicon negative electrode plate was finally obtained.

### Example 12

The difference between Example 12 and Example 1 was that:
the mass ratio of nano-silicon to conductive carbon black was 50:30, and the silicon negative electrode plate was finally obtained.

### Example 13

The difference between Example 13 and Example 1 was that:
the mass ratio of nano-silicon to conductive carbon black was 40:20, and the silicon negative electrode plate was finally obtained.

### Example 14

The difference between Example 14 and Example 1 was that:
the mass ratio of nano-silicon to conductive carbon black was 30:30, and the silicon negative electrode plate was finally obtained.

### Example 15

The difference between Example 15 and Example 1 was that:
graphene was used instead of conductive carbon black, and silicon negative electrode plate was finally obtained.

### Example 16

The difference between Example 16 and Example 1 was that:
the mass ratio of nano-silicon to perfluorooctanesulfonic acid was 2:100, and the silicon negative electrode plate was finally obtained.

### Example 17

The difference between Example 17 and Example 1 was that
the mass ratio of nano-silicon to perfluorooctanesulfonic acid was 5:100, and the silicon negative electrode plate was finally obtained.

### Example 18

The difference between Example 18 and Example 1 was that:
the mass ratio of nano-silicon to perfluorooctanesulfonic acid was 1:100, and the silicon negative electrode plate was finally obtained.

### Example 19

The difference between Example 19 and Example 1 was that:
the silicon material was a Si/SiOz composite material, and the mass ratio of Si to SiO₂ was 8:2, and the silicon negative electrode plate was finally obtained.

### Comparative Example 1

The difference between Comparative Example 1 and Example 1 was that:
perfluorooctanesulfonic acid was not added, and the mass of the added PVDF was the same with the total mass of PVDF and perfluorooctanesulfonic acid in Example 1, and the silicon negative electrode plate was finally obtained.

### Comparative Example 2

The difference between Comparative Example 2 and Example 1 was that:
PVDF was not added, and the mass of the added perfluorooctanesulfonic acid was the same with the total mass of PVDF and perfluorooctanesulfonic acid in Example 1, and the silicon negative electrode plate was finally obtained.

### Comparative Example 3

The difference between Comparative Example 3 and Example 1 was that:
polytetrafluoroethylene was used instead of PVDF and perfluorooctanesulfonic acid in Example 1, and the silicon negative electrode plate was finally obtained.

### Comparative Example 4

The difference between Comparative Example 4 and Example 1 was that:
sodium alginate was used instead of PVDF and perfluorooctanesulfonic acid in Example 1, and the silicon negative electrode plate was finally obtained.

### Comparative Example 5

The difference between Comparative Example 5 and Example 1 was that:
sodium carboxymethyl cellulose was used instead of PVDF and perfluorooctanesulfonic acid in Example 1, and the silicon negative electrode plate was finally obtained.

### Comparative Example 6

The difference between Comparative Example 6 and Example 1 was that:
styrene-butadiene copolymer was used instead of PVDF and perfluorooctanesulfonic acid in Example 1, and the silicon negative electrode plate was finally obtained.

### Comparative Example 7

The difference between Comparative Example 7 and Example 1 was that:
polyacrylonitrile was used instead of PVDF and perfluorooctanesulfonic acid in Example 1, and the silicon negative electrode plate was finally obtained.

### Comparative Example 8

The difference between Comparative Example 8 and Example 1 was that:
polytetrafluoroethylene was used instead of PVDF, and the silicon negative electrode plate was finally obtained.

### Comparative Example 9

The difference between Comparative Example 9 and Example 1 was that:
sodium alginate was used instead of PVDF, and the silicon negative electrode plate was finally obtained.

### Comparative Example 10

The difference between Comparative Example 10 and Example 1 was that:
sodium carboxymethyl cellulose was used instead of PVDF, and the silicon negative electrode plate was finally obtained.

### Comparative Example 11

The difference between Comparative Example 11 and Example 1 was that:
styrene-butadiene copolymer was used instead of PVDF, and the silicon negative electrode plate was finally obtained.

### Comparative Example 12

The difference between Comparative Example 12 and Example 1 was that:
polyacrylonitrile was used instead of PVDF, and the silicon negative electrode plate was finally obtained.

### Comparative Example 13

The difference between Comparative Example 13 and Example 1 was that:
acrylic ester polymer was used instead of PVDF, and the silicon negative electrode plate was finally obtained.

The silicon negative electrode plates prepared in above Examples 1 to 19 and Comparative Examples 1 to 13 were cut into various types of silicon negative electrode plates of the same specification and size as required.

At least three silicon negative electrode plates of each example or the comparative example cut to the same specification size were each independently tested as follows:
taking one silicon negative electrode plate after cutting, referring to GB 2792-1998, using a peeling tape to adhere to the surface of the electrode plate, and peeling it with an electrode plate peeler to directly test its peeling force, and taking another silicon negative electrode plate after cutting, and testing its peeling force after soaking it in an electrolyte solution for 24h and drying it at 60° C, wherein the electrolyte solution was a 1 mol/L LiPF₆ solution. The solvent in the LiPF₆ solution was a mixed solvent, and the mixed solvent comprised vinylidene carbonate and methyl ethyl carbonate, and the volume ratio of the two was 1: 1.

Battery assembly: taking a silicon negative electrode plate after cutting again, assembling it with a lithium sheet to form the electrode material, separating with a PE separator, using 1 mol/L LiPF₆ solution as the electrolyte solution, and obtaining the lithium battery. The solvent in the LiPF₆ solution was a mixed solvent, and the mixed solvent comprised vinylidene carbonate and methyl ethyl carbonate, and the volume ratio of the two was 1:1.

Under the conditions of test voltage range of 0.01-3V and charge/discharge current of 0.42A, the first discharge capacity (mAh/g), the first coulombic efficiency (%), and the discharge capacity retention rate (%) after cycling for 100 cycles of each lithium battery were tested, and all the above test results were listed in Table 1.

**Table 1**

| Example/ Comparative Example | Peeling force (N/m) | Peeling force after soaking in the electrolyte solution for 24h, and drying (N/m) | First discharge capacity (mAh/g) | First Coulombic Efficiency (%) | Discharge capacity retention rate after cycling for 100 cycles (%) |
|---|---|---|---|---|---|
| Example 1 | 36 | 23 | 3120 | 62 | 90 |
| Example 2 | 35 | 22 | 3100 | 61 | 89 |
| Example 3 | 37 | 24 | 3090 | 60 | 88 |
| Example 4 | 38 | 25 | 2920 | 59 | 85 |
| Example 5 | 34 | 21 | 2910 | 58 | 84 |
| Example 6 | 35 | 23 | 3110 | 62 | 90 |
| Example 7 | 34 | 22 | 3100 | 61 | 89 |
| Example 8 | 36 | 23 | 3090 | 61 | 89 |
| Example 9 | 35 | 22 | 3101 | 60 | 88 |
| Example 10 | 33 | 21 | 3001 | 59 | 84 |
| Example 11 | 35 | 22 | 3112 | 61 | 90 |
| Example 12 | 36 | 23 | 3123 | 62 | 89 |
| Example 13 | 35 | 23 | 3100 | 62 | 90 |
| Example 14 | 34 | 22 | 3000 | 59 | 84 |
| Example 15 | 35 | 23 | 3130 | 62 | 89 |
| Example 16 | 37 | 24 | 3110 | 62 | 90 |
| Example 17 | 32 | 21 | 3290 | 61 | 89 |
| Example 18 | 38 | 25 | 3000 | 58 | 85 |
| Example 19 | 36 | 23 | 3110 | 61 | 89 |
| Comparative Example 1 | 27 | 10 | 2854 | 57 | 43 |
| Comparative Example 2 | 26 | 7 | 2580 | 43 | 28 |
| Comparative Example 3 | 28 | 9 | 2751 | 55 | 33 |
| Comparative Example 4 | 26 | 11 | 2638 | 47 | 38 |
| Comparative Example 5 | 28 | 10 | 2547 | 49 | 46 |
| Comparative Example 6 | 26 | 9 | 2985 | 51 | 41 |
| Comparative Example 7 | 27 | 6 | 2254 | 58 | 23 |
| Comparative Example 8 | 32 | 15 | 2870 | 51 | 71 |
| Comparative Example 9 | 30 | 11 | 3075 | 48 | 65 |
| Comparative Example 10 | 28 | 12 | 2894 | 49 | 62 |
| Comparative Example 11 | 29 | 10 | 2885 | 58 | 57 |
| Comparative Example 12 | 28 | 11 | 2967 | 82 | 46 |
| Comparative Example 13 | 27 | 12 | 3075 | 49 | 58 |

From the above description, it can be seen that the above examples of the present application achieve the following technical effects:
Perfluorosulfonic acid is used as a flexible binder, and the use of perfluorosulfonic acid can effectively enhance the toughness of the electrode plate, alleviate the expansion effect of the silicon material and thereby reduce the phenomenon of electrode cracking, and then maintain the integrity of the silicon negative electrode structure, reduce the loss of active materials, and enhance the cycling performance of the battery. In addition, perfluorosulfonic acid itself can form strong hydrogen bond with the surface of Si electrode plate material, so perfluorosulfonic acid has excellent bonding effect on Si material; at the same time, perfluorosulfonic acid has weak absorption ability to electrolyte solution, so it can effectively mitigate swelling effects of PVDF in the electrolyte solution, ensure the 3D bonding network structure of the electrode plate, and then make the lithium battery have a higher capacity retention rate. Therefore, using the combination of perfluorosulfonic acid and PVDF as the components of the composite binder can achieve synergy between the two, which not only improves the bonding strength of the binder to the silicon material, but also improves the overall electrical performance of the lithium battery.

The above descriptions are only preferred embodiments of the present application, and are not used to limit the present application. For those skilled in the art, the present application can have various changes and modifications. Any modification, equivalent replacement, or improvement made within the spirit and principle of the present application should be included in the protection scope of the present application.

## Claims

1. A composite binder, wherein the composite binder comprises perfluorosulfonic acid, polyvinylidene fluoride, and a solvent.

2. The composite binder of claim 1, wherein a mass ratio of the perfluorosulfonic acid to the polyvinylidene fluoride is (2-4): 1, preferably 3:1.

3. The composite binder of claim 1 or 2, wherein the perfluorosulfonic acid is a perfluorosulfonic acid of C₃ to C₁₀, preferably the perfluorosulfonic acid is selected from any one or more of the group consisting of perfluorobutanesulfonic acid, perfluoropentanesulfonic acid, perfluorohexanesulfonic acid, perfluoroheptanesulfonic acid, and perfluorooctanesulfonic acid.

4. The composite binder of any one of claims 1 to 3, wherein a mass concentration of the perfluorosulfonic acid in the composite binder is in a range from 0.2 wt% to 10 wt%.

5. The composite binder of claim 1, wherein the solvent is selected from any one or more of the group consisting of N-methylpyrrolidone, acetone, tetrahydrofuran, and dimethyl sulfoxide.

6. A negative electrode slurry, comprising a binder liquid, a silicon material, and a conductive agent, wherein the binder liquid is the composite binder of any one of claims 1 to 5.

7. The negative electrode slurry of claim 6, wherein a mass ratio of the silicon material to the conductive agent is (40-50): (20-30), and a mass ratio of the silicon material to the perfluorosulfonic acid in the composite binder is (2-5):100.

8. A negative electrode slurry of claim 6 or 7, wherein the conductive agent is selected from any one or more of the group consisting of conductive carbon black, graphite, acetylene black, carbon nanotubes, and graphene, and the silicon material includes any one or more of Si, SiC, SiOz, and SiO.

9. A silicon negative electrode plate, comprising a current collector and a negative electrode body, wherein the negative electrode body is prepared from the negative electrode slurry of any one of claims 6 to 8.

10. A lithium-ion battery, comprising a positive electrode plate, a negative electrode plate, and an electrolyte solution, wherein the negative electrode plate is the silicon negative electrode plate of claim 9.
